# EUROPÄISCHE PATENTSCHRIFT

(11) **EP 2 466 246 B1**
(45) Veröffentlichungstag und Bekanntmachung des Hinweises auf die Patenterteilung: **04.04.2018**
(21) Anmeldenummer: 11009634.4
(22) Anmeldetag: 07.12.2011
(51) Int. Cl.: F41G 7/22, G01S 3/781, G01S 3/784, G02B 17/06, G02B 17/08

(54) **Cassegrainoptik**
Cassegrain lens
Optique cassegrain

(30) Priorität: 15.12.2010 DE 102010054750; 22.12.2010 DE 102010055489
(43) Veröffentlichungstag der Anmeldung: 20.06.2012
(73) Patentinhaber: Diehl Defence GmbH & Co. KG, 88662 ÜBERLINGEN (DE)
(72) Erfinder: Baumann, Rainer, 88662 Überlingen (DE)
(74) Vertreter: Diehl Patentabteilung

(56) Entgegenhaltungen:
- DE-A1- 10 036 309
- DE-A1-102007 019 101
- US-A- 5 114 238
- US-A1- 2003 206 338
- ACKERMANN M R; MCGRAW J T; ZIMMER P C: "Five-lens corrector for Cassegrain-form telescopes", PROCEEDINGS OF SPIE - THE INTERNATIONAL SOCIETY FOR OPTICAL ENGINEERING - CURRENT DEVELOPMENTS IN LENS DESIGN AND OPTICAL ENGINEERING, Bd. 7060, 12. August 2008 (2008-08-12), - 12. August 2008 (2008-08-12), Seiten 1-13, XP002671359, USA ISSN: 0277-786X ISBN: 978-0-8194-7280-9
- LEI Z; GUANG J: "Athermalization of coaxial reflective space telescope", PROCEEDINGS OF SPIE - 5TH INTERNATIONAL SYMPOSIUM ON ADVANCED OPTICAL MANUFACTURING AND TESTING TECHNOLOGIES: LARGE MIRRORS AND TELESCOPES, Bd. 7654, 29. April 2010 (2010-04-29), - 29. April 2010 (2010-04-29), Seiten 1-5, XP002671360, SPIE ISSN: 0277-786X ISBN: 978-0-8194-8084-2

## Beschreibung

Die Erfindung betrifft eine Cassegrainoptik zum Abbilden einer Objektszene auf einem Detektor mit einer Detektoroptik mit einem Objektiv mit mehreren Linsen, einer relativ zur Detektoroptik beweglichen Spiegeloptik mit einem Hauptspiegel und einem Fangspiegel und einem optischen Gelenk zum Nachführen des Strahlengangs auf den Detektor bei einer Roll-Nick-Bewegung der Spiegeloptik. Eine derartige Cassegrainoptik ist beispielsweise in der DE 10 2007 019 101 A1 offenbart.

Der Artikel "Five lens corrector for Cassegrain-form telescopes" von M. R. Ackermann, J. T. McGraw, P. C. Zimmer, erschienen in Proceedings of SPIE - Current Developments in Lens Design and Optical Engineering, Bd. 7060, 12.08.2008 beschäftigt sich mit der Korrektur von Abbildungsfehlern von Cassegrain-artigen Teleskopen. Hierzu wird ein auf fünf Linsen basierender Korrekturansatz vorgeschlagen, um die optische Leistungsfähigkeit einer vorgegebenen Spiegeloptik mit Haupt- und Fangspiegel zu verbessern.

Die US 5 114 238 A beschäftigt sich mit einem katadioptrischen Zoom-Relais-Teleskop für den infraroten Spektralbereich mit einem Haupt- und einem Fangspiegel und mit vier Abbildungslinsen und einer Feldlinse. Um die chromatische Aberration zu korrigieren, wird für die aus dem gleichen Material gefertigten, einzelnen Linsen ein entsprechendes Design gewählt.

Zielsuchende Flugkörper sind mit einem Suchkopf mit Sucheroptik ausgestattet, die der Bewegung eines sich bewegenden Ziels nachgeführt werden kann. Dazu ist eine Eingangsoptik beweglich zum Dom des Flugkörpers beziehungsweise dessen Gehäuse gelagert und motorisch so angetrieben, dass sie in einem großen Winkelbereich verschwenkbar ist. Eine solche Sucheroptik ist aus der DE 101 35 222 A1 bekannt.

Zum Erfassen von Zielen, die sich in einer sehr weiten Entfernung vom Flugkörper befinden, ist eine sehr exakte Abbildung mit geringen Bildfehlern auf einer bildgebenden Einheit, beispielsweise einem Detektor, vorteilhaft, um das Ziel auch in großer Entfernung zuverlässig als solches erfassen zu können.

Es ist eine Aufgabe der Erfindung, eine Cassegrainoptik zum Abbilden einer Objektszene auf einem gehäusefesten Detektor anzugeben, die klein bauend ausgeführt werden kann und die eine gute Auflösung des Ziels ermöglicht.

Diese Aufgabe wird durch eine Cassegrainoptik der eingangs genannten Art gelöst, bei der erfindungsgemäß der Hauptspiegel eine diffraktive Fläche aufweist.

Die Erfindung geht hierbei von der Überlegung aus, dass eine Cassegrainoptik eine hohe Auflösung gestattet, da sie eine Objektszene sehr gerichtet abtastet, also das Gesichtsfeld einer Cassegrainoptik zwar klein aber noch groß genug zur zuverlässigen Ausrichtung eines Flugkörpers ist. Außerdem ist eine Cassegrainoptik klein bauend und leicht herstellbar, sodass das Gewicht auch eines kleinen Flugkörpers nicht über die Maßen durch das Gewicht der Optik vergrößert wird. Daher ist eine Cassegrainoptik besonders geeignet. Mit wachsender Geschwindigkeit moderner Flugkörper ist jedoch eine gute Auflösung des Ziels in einer immer höheren Entfernung wünschenswert, um frühzeitig Zielbewegungen nachverfolgen und den Flugkörper entsprechend ausrichten zu können, sodass er im Endanflug eine hohe Manöverüberlegenheit gegenüber dem Ziel behält. Bei einer Abbildung eines kleinen Ziels aus einer Entfernung von mehreren Kilometern kann bei einer Cassegrainoptik jedoch das Problem der Bildfehler störend wirken. Zum Erreichen einer besonders guten Bildqualität müssen solche eventuell auftretenden Bildfehler daher korrigiert werden. Durch den Einsatz eines Objektivs mit mehreren Linsen als Detektoroptik können solche Bildfehler ausreichend ausgeglichen werden und eine hohe Auflösung eines weit entfernten Ziels kann erreicht werden.

Unter einer Cassegrainoptik wird im Folgenden eine katadioptrische Optik mit zumindest zwei Spiegeln verstanden, von denen der erste Spiegel - also derjenige Spiegel der Cassegrainoptik, auf den Strahlen aus der Objektszene zuerst auftreffen, ein konkaver, insbesondere asphärischer Hauptspiegel ist und der zweite Spiegel ein konvexer, insbesondere asphärischer Fangspiegel ist. Der Strahlgang aus der Objektszene verläuft über den Hauptspiegel direkt oder indirekt zum Fangspiegel und von dort auf einen Detektor zum Aufzeichnen eines Bildsignals aus der Objektszene. Die Cassegrainoptik ist zweckmäßigerweise Teil eines Suchkopfs eines Flugkörpers, sodass die Erfindung auch gerichtet sein kann auf einen Flugkörper mit einem Suchkopf umfassend eine erfindungsgemäße Cassegrainoptik. Der Suchkopf ist vorteilhafterweise an der Spitze des Flugkörpers und insbesondere unter einem Dom angeordnet.

Zur Korrektur des Farbfehlers der Cassegrainoptik ist entsprechend der Erfindung vorgesehen, dass der Hauptspiegel eine diffraktive Fläche aufweist. Mit dieser Maßnahme kann ein Farblängsfehler korrigiert oder gezielt eingestellt werden. Die diffraktive Fläche ist ein optisches Element, das eine beugende Wirkung besitzt. Sie kann als Fresnellinse ausgeführt sein und mehrere kreisrunde optische Zonen symmetrisch um die optische Achse des Strahlengangs aufweisen. Sie ist zweckmäßigerweise so gewählt, dass der Brennpunkt des Hauptspiegels für unterschiedliche Farben unterschiedlich weit liegt.

Der Detektor ist zweckmäßigerweise gehäusefest angeordnet. Hierzu kann er starr mit einem Gehäuse verbunden sein, das die Cassegrainoptik umgibt, beispielsweise einem Flugkörpergehäuse. Vorteilhafterweise sind Detektoroptik und Detektor unverkippbar zueinander angeordnet. Vorteilhaft ist es, wenn die Beweglichkeit von Linsen der Detektoroptik relativ zum Detektor entlang der optischen Achse gegeben ist, sodass eine einzelne Linse oder eine Linsengruppe auf der optischen Achse verschoben werden kann. Hierdurch kann ein Zoom-Objektiv gebildet werden.

Das optische Gelenk kann ein Spiegelgelenk mit mehreren Spiegelflächen sein. Besonders vorteilhaft ist das optische Gelenk ein Prismengelenk mit mehreren spiegelnden Prismen. Besonders vorteilhaft sind vier Spiegel beziehungsweise spiegelnde Prismenflächen.

Die Spiegeloptik ist relativ zur Detektoroptik und dem Detektor beweglich, zweckmäßigerweise drehbar und/oder schwenkbar. Auf diese Weise kann die Spiegeloptik um z.B. eine Rollachse und/oder eine Nickachse gedreht werden, wodurch eine besonders gute Beweglichkeit der Spiegeloptik erreicht wird. Vorteilhafterweise ist ein Primärteil des Prismengelenks mit der Spiegeloptik starr verbunden und ein Sekundärteil des Prismengelenks sowohl zur Spiegeloptik als auch zu zumindest eines Teils der Detektoroptik beweglich gelagert. Eine einfache Ausführung des optischen Gelenks kann erreicht werden, wenn der Strahlengang der Cassegrainoptik zumindest auf einem Teilweg innerhalb des optischen Gelenks symmetrisch zu einer Rollachse und einer Nickachse der Cassegrainoptik verläuft. Im Übergang von einem Primärteil zu einem Sekundärteil des optischen Gelenks verläuft der Strahlengang zweckmäßigerweise symmetrisch zur Nickachse.

Umfasst der Primärteil drei Spiegelflächen und Sekundärteil nur eine Spiegelfläche, so kann Aktuatoren zum Bewegen der Spiegeloptik besonders viel Raum zur Verfügung gestellt werden, ohne eine Beweglichkeit der Spiegeloptik stark einschränken zu müssen. Außerdem ist es vorteilhaft, wenn die Cassegrainoptik zwischen dem Primärteil und dem Sekundärteil ein Zwischenbild erzeugt, so dass die Möglichkeit für Abblendungen im Zwischenbild besteht. Vorteilhafterweise ist im Zwischenbild des Cassegrainobjektivs eine Kreisblende angeordnet, wodurch der Anteil von auf den Detektor einfallendem Streulicht gering gehalten werden kann. Weiter vorteilhaft ist der Primärteil des optischen Gelenks monolithisch ausgeführt und umfasst drei Spiegelflächen. Durch die monolithische Ausführung bei relativ vielen Spiegelflächen können Reflexionsverluste gering gehalten werden.

Eine vorteilhafte Ausführungsform der Erfindung sieht vor, dass das Detektorobjektiv aus vier Linsen besteht, die die Objektszene auf den Detektor abbilden. Mit einer Anordnung aus vier Linsen kann ein sehr guter Kompromiss zwischen einer sehr guten Abbildung und einem klein bauenden und leichten Detektorobjektiv erreicht werden.

Eine besonders gute Korrektur von Bildfehlern einer Cassegrainoptik kann erreicht werden, wenn die erste, dritte und vierte der vier Linsen Sammellinsen sind und die zweite Linse eine Zerstreuungslinse ist. Mit gleichem Vorteil weisen die erste und dritte der vier Linsen zweckmäßigerweise eine negative Durchbiegung auf. Optional kann auch die zweite der vier Linsen eine negative Durchbiegung haben. Die negative Durchbiegung dient zur Korrektur von Öffnungsfehlern. Die erste der vier Sammellinsen ist diejenige Linse, die der von der Objektszene kommende Strahlengang zuerst erreicht.

Für eine besonders vollständige Korrektur der Bildfehler der beiden asphärischen Spiegel sollte auch das Detektorobjektiv zumindest zwei asphärische Flächen aufweisen. Hierdurch wird ein kompaktes Design des Detektorobjektivs bei einer guten Korrektur der optischen Fehler des Spiegelobjektivs erreicht. Die asphärische Flächen sind zweckmäßigerweise auf zumindest zwei Linsen verteilt.

Vorteilhafterweise sind die erste und die vierte Linse mit zumindest einer asphärischen Fläche versehen, wobei optional auch die zweite Linse eine asphärische Fläche tragen kann. Zum Erreichen von kleinen Linsen verbunden mit einer guten Bildfehlerkorrektur ist es vorteilhaft, wenn die beiden asphärischen Flächen die Austrittsfläche der ersten Linse und die Eintrittsfläche der vierten Linse sind.

In einer weiteren Ausführungsform der Erfindung bestehen mehrere Sammellinsen des Detektorobjektivs aus einem Sammellinsenmaterial und zumindest eine Zerstreuungslinse aus einem Zerstreuungslinsenmaterial, dessen Dispersion zumindest genauso groß ist wie die des Sammellinsenmaterials, zweckmäßigerweise größer ist. Mit dieser Maßnahme können Farbfehler im Detektorobjektiv besonders gut ausgeglichen werden. Die erste und die zweite Linse bilden zweckmäßigerweise einen Achromat, weisen also zusammen keinen Farbfehler auf. Vorteilhafterweise bewirken die dritte und die vierte Linse zusammen eine Astigmatismuskorrektur.

Insbesondere bei Ausführung des optischen Gelenks als Prismengelenk ist es vorteilhaft, wenn das optische Material des Prismengelenks, durch das der Strahlengang der Cassegrainoptik geführt wird, eine geringere Dispersion aufweist als zumindest eine Linse des Detektorobjektivs.

Eine weitere optische Korrekturmöglichkeit innerhalb der erfindungsgemäßen Cassegrainoptik liegt in optischen Flächen des optischen Gelenks. Von diesen hat zweckmäßigerweise zumindest eine eine von einer ebenen Fläche abweichende Form. Eine besonders vorteilhafte Korrektur besteht darin, dass das optische Gelenk zumindest eine asphärische Fläche aufweist. Vorteilhafterweise ist die Eingangsfläche des optischen Gelenks eine asphärische Fläche, wodurch eine Zwischenbildkorrektur innerhalb des optischen Gelenks mit einer hohen Güte erreicht werden kann.

Vorteilhafterweise ist die asphärische Korrekturfläche des optischen Gelenks eine Fläche mit polynomischen Koeffizienten, insbesondere mit ad < 0. Die Korrekturfläche ist insbesondere als doppelt gekrümmte Fläche ausgeführt. Die doppelte Krümmung kann in Form einer Sattelfläche ausgeführt sein. Hierdurch kann insbesondere ein Zwischenbild besonders effektiv korrigiert werden.

Zur Verwendung der Cassegrainoptik bei unterschiedlichen Temperaturen ist es vorteilhaft, wenn die Cassegrainoptik zumindest teilweise temperaturkompensiert ist. Eine gute Temperaturkompensation kann erreicht werden, wenn das Material des Hauptspiegels einen höheren Temperaturausdehnungskoeffizienten aufweist als die Materialien des Fangspiegels und des Distanzstücks.

Ein Variobjektiv mit einer einstellbaren Brennweite kann erreicht werden, wenn die Detektoroptik zwei in Richtung der optischen Achse relativ zueinander verschiebbare Linsengruppen aufweist. Die Linsengruppen können aus einer oder mehreren Linsen bestehen.

Weitere Vorteile ergeben sich aus der folgenden Zeichnungsbeschreibung. In der Zeichnung sind Ausführungsbeispiele der Erfindung dargestellt. Die Zeichnung und die Beschreibung enthalten zahlreiche Merkmale in Kombination, die der Fachmann zweckmäßigerweise auch einzeln betrachten und zu sinnvollen weiteren Kombinationen zusammenfassen wird.

Es zeigen:
- Fig. 1: Eine Cassegrainoptik in einem Flugkörper,
- Fig. 2: eine andere Cassegrainoptik in einem Flugkörper,
- Fig. 3: ein Punktbildenergiediagramm zur Cassegrainoptik aus Fig. 1 und
- Fig. 4: ein Punktbildenergiediagramm zur Cassegrainoptik aus Fig. 2

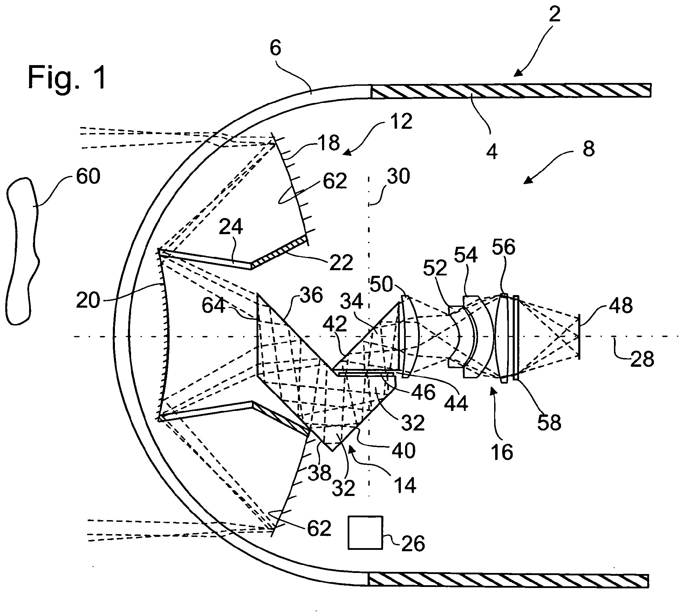

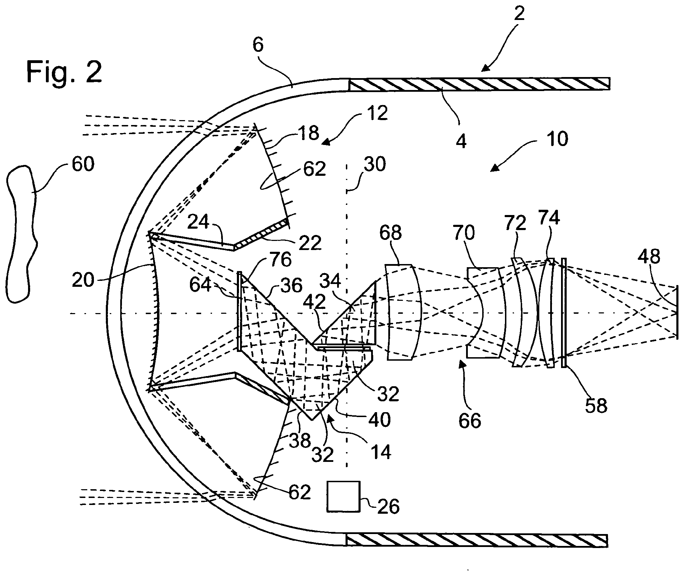

Fig. 1 zeigt eine schematische Schnittdarstellung durch den vorderen Teil eines Flugkörpers 2 mit einem Gehäuse 4, das im vordersten Bereich des Flugkörpers 2 in einem transparenten und halbkugelförmigen Dom 6 übergeht. Die Transparenz bezieht sich auf das Licht beziehungsweise die Strahlung, zu deren Aufnahme eine Cassegrainoptik 8 ausgelegt ist. In den folgenden Ausführungsbeispielen sind die beiden Cassegrainoptiken 8 (Fig. 1) und 10 (Fig. 2) für den Spektralbereich von 4,1 µm bis 4,9 µm beziehungsweise 4,0 µm bis 5,0 µm ausgelegt.

Die Cassegrainoptik 8 umfasst eine Spiegeloptik 12, ein optisches Gelenk 14 und Detektoroptik 16. Die Spiegeloptik 12 ist mit einem konkaven asphärischen Hauptspiegel 18 und einem konvexen asphärischen Fangspiegel 20 ausgerüstet. Hauptspiegel 18 und Fangspiegel 20 sind über ein Haltegestell mit einem Blendenrohr 22 und Haltestreben 24 starr und somit unbeweglich zueinander aneinander befestigt. Mittels eines schematisch dargestellten Aktuators 26 kann die Spiegeloptik 12 beliebig oft um eine Rollachse 28 gedreht werden und um etwa ± 90° um eine Nickachse 30 verschwenkt werden.

Das optische Gelenk 14 ist ein Prismengelenk aus zwei Prismen 32, 34, wobei das erste Prisma 32 ein monolithischer Block mit drei Spiegelflächen 36, 38, 40 ist und das zweite Prisma 34 eine einzige Spiegelfläche 42 aufweist. Anstelle des monolithischen Blocks des ersten Prismas 32 sind auch mehrere Prismen, beispielsweise drei Prismen mit jeweils einer Spiegelfläche, möglich. Anstelle des Prismengelenks sind auch andere optische Gelenke denkbar, beispielsweise solche mit prismenlosen Spiegeln oder dergleichen.

Das optische Gelenk 14 ist aufgeteilt in einen Primärteil und einen Sekundärteil. Der Primärteil, der in dem in Fig. 1 gezeigten Ausführungsbeispiel das Prisma 32 umfasst und alternativ aus äquivalenten Spiegeln aufgebaut sein kann, ist starr mit der Spiegeloptik 12 verbunden, beispielsweise durch eine direkte Verbindung mit dem Hauptspiegel 18 oder durch eine Befestigung am Blendenrohr 22. Dieser Primärteil ist also ebenfalls um die Rollachse 28 drehbar und um die Nickachse 30 verschwenkbar. Der Sekundärteil des optischen Gelenks 14 besteht im gezeigten Ausführungsbeispiel aus dem Prisma 34 mit der Spiegelfläche 42, wobei in analoger Weise alternative Ausführungsformen denkbar sind. Dieser Teil des optischen Gelenks 14 ist zwar um die Rollachse 28 drehbar, jedoch nicht um die Nickachse 30 verschwenkbar. Zwischen dem Primärteil und dem Sekundärteil besteht ein Luftspalt 44, in dem in diesem Ausführungsbeispiel eine Ringblende 46 angeordnet ist. Diese dient dazu, den Streulichtanteil auf einem Detektor 48 zu verringern. Im Luftspalt 44 kann ein Schutzelement zum Schutz gegen Blendstrahlung angeordnet werden, beispielsweise eine in den Luftspalt 44 einführbare Blende, die mit Hilfe eines Aktuators in den Luftspalt 44 eingefahren wird.

Die Detektoroptik 16 ist aus vier Linsen 50, 52, 54, 56 gebildet, an deren Austrittspupille eine Kaltblende 58 sitzt, die die wirksame Apertur der Cassegrainoptik ist. Hierdurch kann eine hohe so genannte Kaltblendeneffektivität, insbesondere von 100 %, erreicht werden, wobei die Infrarot-Detektorelemente des Detektors 48 keine warmen Strukturwände sehen und das Infratrot-Signal-Rausch-Verhältnis sehr gut ist. Die Abbildung einer kleinen Eintrittspupille auf eine Austrittspupille mit Kaltblende 58 kann nur mit einer zweistufigen Optik erfolgen, wie in Fig. 1 dargestellt ist. Durch die Wahl einer Detektoroptik 6 aus vier Linsen 50 - 56 kann eine kurze Baulänge der Cassegrainoptik bei einem kleinen Durchmesser der Detektoroptik 16 mit guter Abbildungsqualität erreicht werden.

Der Detektor 48 mit der Kaltblende 58, auf den eine Objektszene 60 mit Hilfe der Cassegrainoptik 8 abgebildet wird, ist starr mit dem Gehäuse 4 des Flugkörpers 2 oder dem Rollrahmen verbunden. Während des regulären Betriebs der Cassegrainoptik 8 ist auch die Detektoroptik 16 und die Kaltblende 58 starr mit dem Gehäuse 6 oder dem Rollrahmen verbunden. In einem weiteren Ausführungsbeispiel können eine oder mehrere Linsen des Detektorobjektivs 16 in Richtung der optischen Achse, die mit der Rollachse 28 zusammenfällt, verschiebbar gelagert sein, sodass ein Varioobjektiv mit einer kontinuierlich veränderbaren Brennweite entsteht.

Die Cassegrainoptik 8 weist mehrere vorteilhafte optische Details auf, die im vorliegenden Ausführungsbeispiel zwar aufeinander abgestimmt, jedoch auch einzeln in alternativen Optiken vorteilhaft verwendet werden können. So liegt beispielsweise eine Eintrittsfläche 64 des Prismengelenks innerhalb eines von dem Hauptspiegel 18 und dem Fangspiegel 20 gebildeten Raums, wodurch die Cassegrainoptik 8 in ihrer Länge kompakt ist. Außerdem kann der Hauptspiegel 18 mit einer diffraktiven Fläche 62 versehen, die beugend wird, z.B. in der Art einer Fresnellinse.

Weiter besitzt die Eintrittsfläche 64 des optischen Gelenks 14 eine asphärische Fläche zur Bildkorrektur eines Zwischenbilds im Luftspalt 44. Die asphärische Eintrittsfläche 64 ist leicht negativ gekrümmt mit ad < 0. Zweckmäßigerweise ist sie in Form einer Sattelfläche ausgeführt. Besonders vorteilhaft ist die Kombination aus diffraktiver Fläche 62 und asphärischer Eintrittsfläche 64, wodurch ein sehr gutes Zwischenbild im Spalt 44 des optischen Gelenks 14 erzielt werden kann.

Weiter sind folgende Eigenschaften für eine gute Punktbildqualität vorteilhaft: Die erste Linse 50 sollte sehr nahe an der Austrittsfläche des optischen Gelenks 14 angeordnet sein, zweckmäßigerweise mit einem geringsten Abstand von weniger als 2 mm. Im dargestellten Ausführungsbeispiel ist der Abstand weniger als 1 mm. Weiter ist die negative Durchbiegung vorteilhaft. Die zweite Linse sollte eine negative Brechkraft haben und kann positiv oder negativ durchgebogen sein. Auch die dritte Linse sollte eine positive Brechkraft haben, wobei eine negative Durchbiegung vorteilhaft ist. Die vierte Linse sollte ebenfalls eine positive Brechkraft haben, jedoch eine positive Durchbiegung. Der Abstand zwischen der Kaltblende 58 und der Detektorebene beträgt zweckmäßigerweise weniger als 15 mm, wodurch ein Detektorobjektiv 16 mit einer sehr geringen Baugröße und als optische Eigenschaft sehr gute Punktbilder erreicht werden können. Beim gezeigten Ausführungsbeispiel beträgt diese so genannte Kaltblendenlänge 9 mm.

Die Vorteile des erfindungsgemäßen Designs der Cassegrainoptik 8 sind - insbesondere im infraroten Spektralbereich - vielfältig. Das optische Gelenk 14 erlaubt eine Nick-Roll-Bewegung nur der Spiegeloptik 12, wodurch ein hochdynamisches Schielen erreicht werden kann. Die Detektoroptik 16 kann strukturfest angeordnet werden. Außerdem kann auch der Detektor 48 und auch eine nicht dargestellte Kühlereinheit des Detektors 48 strukturfest angeordnet werden, also starr zum Gehäuse 6 befestigt werden. Durch das zweistufige Objektiv, also das optische Gelenk 14 in Verbindung mit der Detektoroptik 16, kann eine 100%ige Kaltblendeneffektivität erreicht werden. Außerdem ist ein Laserschutz im Zwischenbild möglich. Weiter kann durch eine Zwischenbildblende eine hohe Streulichtunempfindlichkeit erreicht werden. Die Kombination mit der Spiegeloptik 12 in Cassegrain-Bauweise erlaubt eine maximale Eintrittsaperturfläche bei kleinem Dom 6. Außerdem ist eine einfache Erweiterung zur multispektralen Sensorik möglich. Weiter erlaubt das erfindungsgemäße Design eine gute passive Temperaturkompensation im Bereich von -60° bis +90°. Hierzu sollte der Primärspiegel 18 aus einem Material mit einem ersten Temperaturausdehnungskoeffizienten bestehen, zum Beispiel aus Aluminium, und das Trägermaterial, wie die Halteanordnung 22, 24, und der Fangspiegel 20 aus einem Material mit einem geringeren Temperaturausdehnungskoeffizienten, beispielsweise aus Titan oder Silizium.

Fig. 2 zeigt ein weiteres Design einer Cassegrainoptik 10, das ähnlich zu der in Fig. 1 dargestellten Optik ist. Die nachfolgende Beschreibung beschränkt sich im Wesentlichen auf die Unterschiede zum Ausführungsbeispiel aus Fig. 1, auf das bezüglich gleich bleibender Merkmale und Funktionen verwiesen wird. Im Wesentlichen gleich bleibende Bauteile sind grundsätzlich mit den gleichen Bezugszeichen beziffert und nicht erwähnte Merkmale sind in den folgenden Ausführungsbeispielen übernommen, ohne dass sie erneut beschrieben sind.

Im Unterschied zum Ausführungsbeispiel aus Fig. 1 wurde im Ausführungsbeispiel aus Fig. 2 eine Kaltblendenlänge von über 15 mm, im konkreten Beispiel von 18 mm gewählt. Die größere Kaltblendenlänge kann dazu genutzt werden, dass nicht nur sehr gute Punktbilder, also sehr scharfe Punktbilder, erreicht werden, sondern auch sehr homogene Punktbilder über den gesamten Bildbereich des Detektors 48, auf den zweckmäßigerweise - wie auch im Ausführungsbeispiel von Fig. 1 - ein Ausschnitt der Objektszene 60 von mehr als 4° x 4°, insbesondere mit mindestens 6° x 6°, abgebildet wird. Während die Spiegeloptik 12 und das optische Gelenk 14 im Wesentlichen gleich aufgebaut sind, ist die Detektoroptik 66 mit vier etwas unterschiedlichen Linsen 68, 70, 72, 74 ausgestattet. Diese Linsen 68 - 74 sind zu Gunsten einer hohen Punktbildhomogenität in Richtung der optischen Achse weiter voneinander beabstandet als bei dem in Fig. 1 gezeigten Ausführungsbeispiel. Des Weiteren ist die asphärische Korrekturfläche 64 nicht unmittelbar eine Eintrittsfläche eines Prismas, sondern eines Korrekturelements 76, das im Strahlengang zwischen dem Fangspiegel 20 und dem ersten Umlenkelement des optischen Gelenks 14 angeordnet ist.

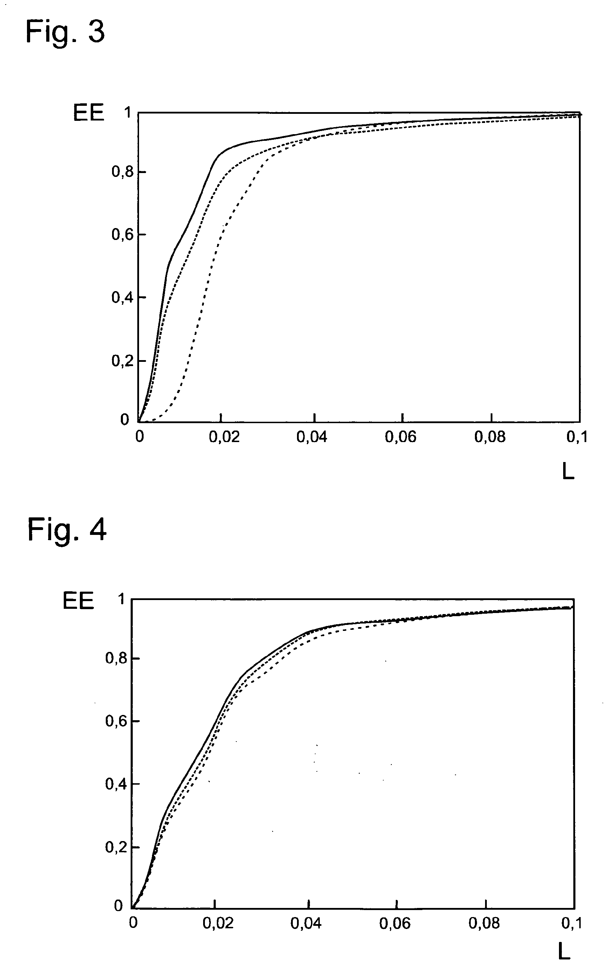

Die Fig. 3 und 4 zeigen die Punktbildenergie EE (Ensquared Energy) in einem Quadrat auf dem Detektor 20, mit der ein Punktbild der Objektszene 60 auf dem Detektor 48 abgebildet wird, aufgetragen gegen die Kantenlänge L eines Quadrats , z.B. eines Pixels oder Detektorelements des Detektors 48. Fig. 3 bezieht sich dabei auf die Cassegrainoptik 8 aus Fig. 1 und Fig. 4 auf die Cassegrainoptik 10 aus Fig. 2. Während die durchgezogene Linie der Energieverlauf eines in der optischen Achse liegenden Bildpunkts ist, zeigt die weiter gestrichelte Linie den Energieverlauf eines Bildpunkts am Bildrand, nämlich bei 2,5° Entfernung zur optischen Achse. Die feiner punktierte Linie zeigt einen Bildpunkt mit einem Abstand von 1,77° von der optischen Achse.

Es ist zu sehen, dass die Cassegrainoptik 8 einen in der Bildmitte, also in der Detektormitte, liegenden Bildpunkt mit einer extrem guten Punktbildqualität abbildet. Bei einer Pixelfläche von 20 µm x 20 µm beträgt die Punktbildenergie knapp 90%. Bei einer üblichen Detektorfläche von 40 µm x 40 µm - also einer Kantenlänge von 40 µm - deutlich über 90%. Allerdings ist die Punktbildhomogenität nur mäßig groß, ein Punktbild verschwimmt also etwas zum Bildrand hin.

Dies ist anders bei Cassegrainoptik 10 aus Fig. 2. Wie aus Fig. 4 ersichtlich ist, ist die Punktdarstellung über die gesamte Detektorfläche fast gleich, sodass es bei der Abbildung eines punktförmigen Objekts bei dessen Wanderung über das Bildfeld des Detektors 48 zu keiner nennenswerten Bildveränderung kommt. Hierdurch kann ein sehr kleines Ziel zuverlässig verfolgt werden, da die Bildverarbeitung auch bei großen Hintergrundstörungen den kleinen Punkt nicht verliert. Die Punktbildenergie ist zwar etwas geringer als in Fig. 3 dargestellt, beträgt jedoch bei einer Pixelfläche von 40 µm x 40 µm auch noch rund 80% und erreicht damit immer noch einen guten Wert.

Die geometrischen Daten der Cassegrainoptik 8 aus Fig. 1 sind in der folgenden Tabelle wiedergegeben:

| Fläche | Radius | Dicke | Aperturradius | Material | Element |
|---|---|---|---|---|---|
| 1 | 37,0 | 2,0 | 37,0 | Saphir | Dom |
| 2 | 35,0 | 36,0 | 35,0 | Luft | |
| 3 | -- | -8,0 | 30,0 | Luft | |
| 4 | -64,3146 | -30,0 | 30,0 | Reflexion | Spiegel 1 |
| 5 | -- | 8,0 | 4,3 | Luft | |
| 6 | -41,9000 | 13,0 | 13,0 | Reflexion | Spiegel 2 |
| 7 | -- | 6,0 | 6,0 | Si-4 | Eintritt |
| 8 | -- | -12,0 | 8,3 | Reflexion | Prisma |
| 9 | -- | 10,0 | 7,0 | Reflexion | Prisma |
| 10 | -- | -6,0 | 7,0 | Reflexion | Prisma |
| 11 | -- | -- | 4,5 | Luft | |
| 12 | -- | -0,5 | 4,0 | Si-4 | |
| 13 | -- | -- | 4,0 | Luft | |
| 14 | -- | -0,5 | 3,1 | Luft | |
| 15 | -- | -5,0 | 5,0 | Si-4 | Eintritt |
| 16 | -- | 5,0 | 7,0 | Reflexion | Prisma |
| 17 | -- | 1,0 | 5,0 | Luft | |
| 18 | -28,0043 | 2,0 | 5,6 | Si-4 | Linse 50 |
| 19 | -11,0346 | 6,0 | 6,0 | Luft | |
| 20 | -4,7601 | 2,0 | 3,7 | ZnSe-4 | Linse 52 |
| 21 | -7,4246 | 0,5 | 4,5 | Luft | |
| 22 | -6,0419 | 2,5 | 4,5 | Si-4 | Linse 54 |
| 23 | -8,1295 | 0,1 | 6,0 | Luft | |
| 24 | 20,5440 | 2,0 | 6,5 | Si-4 | Linse 56 |
| 25 | -71,3857 | 0,1771 | 6,5 | Luft | |
| 26 | -- | 1,0 | 6,0 | Si-4 | Detektorfenster |
| 27 | -- | 0,1 | 6,0 | Luft | |
| 28 | -- | 8,98 | 5,4 | Luft | Aperturblende 58 |
| 29 | -- | -- | 2,55 | Luft | Detektorebene 48 |

Die konischen und polynomischen Asphärendaten sind in der folgenden Tabelle wiedergegeben:

| Fläche | cc | ad | ae | af | ag |
|---|---|---|---|---|---|
| 4 | 1,1515e+00 | 1,0281e-06 | 1,7245e-10 | 1,7414e-13 | -2,0701e-17 |
| 6 | -- | 2,6084e-05 | -6,0121e-08 | 2,0291e-10 | -3,5526e-13 |
| 7 | -- | -3,9681e-05 | -1,7591e07 | 6,9488e-09 | -5,7112e-11 |
| 19 | 5,1814e-01 | 1,2764e-04 | -- | -- | -- |
| 24 | 1,1497e+00 | -9,2226e-05 | -- | -- | -- |

Die optischen Daten sind hierbei:

| | | |
|---|---|---|
| Diffraktive Daten der Fläche 4 | DWV | 4,70e00 |
| | DF1 | 7,2420e-05 |
| Spektralbereich in µm | 4,1 bis 4,9 | |
| Brennweite in mm | -58 | |
| Öffnungszahl | 1,0 | |
| Gesichtsfeld in ± Grad | 2,5 | |
| Kaltblendenlänge in mm | 9 | |

Die geometrischen Daten der Cassegrainoptik 8 aus Fig. 2 sind in der folgenden Tabelle wiedergegeben:

| Fläche | Radius | Dicke | Aperturradius | Material | Element |
|---|---|---|---|---|---|
| 1 | 37,0 | 2,0 | 37,0 | Saphir | Dom |
| 2 | 35,0 | 34,2646 | 35,0 | Luft | |
| 3 | -- | -8,0 | 30,0 | Luft | |
| 4 | -64,3832 | -22,0 | 30,0 | Reflexion | Spiegel 1 |
| 5 | -42,1783 | 13,0 | 12,0 | Reflexion | Spiegel 2 |
| 6 | -- | 1,0 | 6,5 | Ge-4 | Eintritt |
| 7 | -- | -- | 6,5 | Luft | |
| 8 | -- | 6,0 | 6,4 | Si-4 | |
| 9 | -- | -12,0 | 8,5 | Reflexion | Prisma |
| 10 | -- | 10,0 | 7,0 | Reflexion | Prisma |
| 11 | -- | -6,0 | 7,0 | Reflexion | Prisma |
| 12 | -- | 0,0 | 4,0 | Luft | |
| 13 | -- | -0,5 | 3,4 | Si-4 | |
| 14 | -- | -0,5 | 4,0 | Luft | |
| 15 | -- | -- | 4,0 | Luft | |
| 16 | -- | -5,0 | 5,0 | Si-4 | Eintritt |
| 17 | -- | 5,0 | 7,0 | Reflexion | Prisma |
| 18 | -- | 2,0 | 5,0 | Luft | |
| 19 | -60,0724 | 5,0 | 6,5 | Si-4 | Linse 68 |
| 20 | -17,9611 | 9,5975 | 7,5 | Luft | |
| 21 | -7,6659 | 3,6607 | 5,5 | ZnSe-4 | Linse 70 |
| 22 | -24,2643 | 2,4812 | 7,0 | Luft | |
| 23 | -22,5595 | 2,5035 | 8,0 | Si-4 | Linse 72 |
| 24 | -15,4459 | 0,1 | 8,5 | Luft | |
| 25 | 27,0487 | 2,0 | 8,5 | Si-4 | Linse 74 |
| 26 | 70,8803 | 2,0 | 8,0 | Luft | |
| 27 | -- | 17,6540 | 6,2 | Luft | Aperturkaltblende 58 |
| 28 | -- | -- | 3,8 | Luft | Detektorebene 48 |

Die konischen und polynomischen Asphärendaten sind in der folgenden Tabelle wiedergegeben:

| Fläche | cc | ad | ae | af | ag |
|---|---|---|---|---|---|
| 4 | 1,1515e+00 | 1,0281e-06 | 1,7245e-10 | 1.7414e-13 | -2,0701e-17 |
| 5 | -- | 2,6084e-05 | -6,0121e-08 | 2,0291e-10 | -3,5526e-13 |
| 6 | -- | -3,4843e-05 | 3,7935e-07 | -9,4925e-09 | 8,4405e-11 |
| 20 | 2,8151e-01 | 2,2766e-05 | -- | -- | -- |
| 25 | -2,0548e+00 | 8,7351e-06 | -- | -- | -- |

Die optischen Daten sind hierbei:

| | | |
|---|---|---|
| Diffraktive Daten der Fläche 4 | DWV | 4,70e00 |
| | DF1 | 9,7817e-05 |
| Spektralbereich in µm | 4,0 bis 5,0 | |
| Brennweite in mm | -80 | |
| Öffnungszahl | 1,4 | |
| Gesichtsfeld in ± Grad | 2,75 | |
| Kaltblendenlänge in mm | 18 | |

### Bezugszeichenliste

- 2: Flugkörper
- 4: Gehäuse
- 6: Dom
- 8: Cassegrainoptik
- 10: Cassegrainoptik
- 12: Spiegeloptik
- 14: Optisches Gelenk
- 16: Detektoroptik
- 18: Hauptspiegel
- 20: Fangspiegel
- 22: Rohrblende
- 24: Haltestreben
- 26: Aktuator
- 28: Rollachse
- 30: Nickachse
- 32: Prisma
- 34: Prisma
- 36: Spiegelfläche
- 38: Spiegelfläche
- 40: Spiegelfläche
- 42: Spiegelfläche
- 44: Luftspalt
- 46: Ringblende
- 48: Detektor
- 50: Linse
- 52: Linse
- 54: Linse
- 56: Linse
- 58: Kaltblende
- 60: Objektszene
- 62: Diffraktive Fläche
- 64: Fläche
- 66: Detektoroptik
- 68: Linse
- 70: Linse
- 72: Linse
- 74: Linse
- 76: Korrekturelement

## Patentansprüche

1. Cassegrainoptik (8, 10) zum Abbilden einer Objektszene (60) auf einem Detektor (48), die Cassegrainoptik umfassend eine Detektoroptik (16, 66) mit einem Objektiv mit mehreren Linsen (50, 52, 54, 56, 68, 70, 72, 74), eine relativ zur Detektoroptik (16, 66) beweglichen Spiegeloptik (12) mit einem Hauptspiegel (18) und einem Fangspiegel (20) und ein optisches Gelenk (14) zum Nachführen des Strahlengangs auf den Detektor (48) bei einer Roll-Nick-Bewegung der Spiegeloptik (12),
**dadurch gekennzeichnet,**
**dass** der Hauptspiegel (18) eine diffraktive Fläche (62) aufweist, wobei die diffraktive Fläche (62) zweckmäßigerweise so gewählt ist, dass der Brennpunkt des Hauptspiegels (18) für unterschiedliche Farben unterschiedlich weit liegt.

2. Cassegrainoptik (8, 10) nach Anspruch 1,
**dadurch gekennzeichnet,**
**dass** die beweglichen Spiegeloptik (12) einen konkaven asphärischen Hauptspiegel (18) und einen konvexen asphärischen Fangspiegel (20) aufweist und das optischen Gelenk (14) in einen Bauraum zwischen den beiden Spiegeln (18, 20) hereinragt.

3. Cassegrainoptik (8, 10) nach Anspruch 1 oder 2,
**dadurch gekennzeichnet,**
**dass** das Detektorobjektiv aus vier Linsen (50, 52, 54, 56, 68, 70, 72, 74) besteht, die die Objektszene auf den Detektor (48) abbilden.

4. Cassegrainoptik (8, 10) nach Anspruch 3,
**dadurch gekennzeichnet,**
**dass** die erste, dritte und vierte der vier Linsen (50, 54, 56, 68, 72, 74) Sammellinsen sind und die zweite Linse (52, 70) eine Zerstreuungslinse ist.

5. Cassegrainoptik (8, 10) nach Anspruch 3 oder 4,
**dadurch gekennzeichnet,**
**dass** die erste und dritte der vier Linsen (50, 54, 68, 72) eine negative Durchbiegung die zweite Linse (52, 70) eine positive oder negative Durchbiegung und die vierte Linse (56, 74) eine positive oder keine Durchbiegung aufweisen.

6. Cassegrainoptik (8, 10) nach einem der vorhergehenden Ansprüche,
**dadurch gekennzeichnet,**
**dass** zumindest zwei Linsen (50, 52, 54, 56, 68, 70, 72, 74) des Detektorobjektivs zumindest eine asphärische Fläche aufweisen.

7. Cassegrainoptik (8, 10) nach einem der vorhergehenden Ansprüche,
**dadurch gekennzeichnet,**
**dass** das Detektorobjektiv mehrere Sammellinsen (50, 54, 56) aus einem Sammellinsenmaterial und zumindest eine Zerstreuungslinse (52) aus einem Zerstreuungslinsenmaterial aufweist, dessen Dispersion größer ist als die des Sammellinsenmaterials.

8. Cassegrainoptik (8, 10) nach einem der vorhergehenden Ansprüche,
**dadurch gekennzeichnet,**
**dass** das Detektorobjektiv zumindest eine Zerstreuungslinse (52) aus einem Zerstreuungslinsenmaterial aufweist, dessen Dispersion größer als die des optischen Materials des optischen Gelenks (14) ist.

9. Cassegrainoptik (8, 10) nach einem der vorhergehenden Ansprüche,
**dadurch gekennzeichnet,**
**dass** das optische Gelenk (14) eine asphärische Korrekturfläche (64) aufweist.

10. Cassegrainoptik (8, 10) nach Anspruch 9,
**dadurch gekennzeichnet,**
**dass** die asphärische Korrekturfläche (64) eine negativ gekrümmte Fläche ist.

11. Cassegrainoptik (8, 10) nach Anspruch 9 oder 10,
**dadurch gekennzeichnet,**
**dass** die asphärische Korrekturfläche (64) die optische Eingangsfläche des optischen Gelenks (14) ist.

12. Cassegrainoptik (8, 10) nach einem der vorhergehenden Ansprüche,
**dadurch gekennzeichnet,**
**dass** das Material des Hauptspiegels (18) einen höheren Temperaturausdehnungskoeffizienten aufweist als das Material des Fangspiegels (20) und des Haltemittels (22, 24).

13. Cassegrainoptik (8, 10) nach einem der vorhergehenden Ansprüche,
**dadurch gekennzeichnet,**
**dass** die Detektoroptik (16, 66) zwei in Richtung der optischen Achse relativ zueinander verschiebbare Linsengruppen aufweist.

## Claims

1. Cassegrain optics (8, 10) for imaging an object scene (60) on a detector (48), the Cassegrain optics comprising detector optics (16, 66) having an objective having a plurality of lenses (50, 52, 54, 56, 68, 70, 72, 74), mirror optics (12) which can move relative to the detector optics (16, 66) and have a main mirror (18) and a secondary mirror (20), and an optical joint (14) for slaving the beam path to the detector (48) in the event of a roll-pitch movement of the mirror optics (12),
**characterized**
**in that** the main mirror (18) has a diffractive surface (62), wherein the diffractive surface (62) is expediently selected so that the focal point of the main mirror (18) is at different distances for different colours.

2. Cassegrain optics (8, 10) according to Claim 1,
**characterized**
**in that** the moving mirror optics (12) have a concave aspherical main mirror (18) and a convex aspherical secondary mirror (20), and the optical joint (14) projects into a physical space between the two mirrors (18, 20).

3. Cassegrain optics (8, 10) according to Claim 1 or 2,
**characterized**
**in that** the detector objective consists of four lenses (50, 52, 54, 56, 68, 70, 72, 74), which image the object scene on the detector (48).

4. Cassegrain optics (8, 10) according to Claim 3,
**characterized**
**in that** the first, third and fourth of the four lenses (50, 54, 56, 68, 72, 74) are converging lenses, and the second lens (52, 70) is a diverging lens.

5. Cassegrain optics (8, 10) according to Claim 3 or 4,
**characterized**
**in that** the first and third of the four lenses (50, 54, 68, 72) have negative bending, the second lens (52, 70) has positive or negative bending, and the fourth lens (56, 74) has positive or no bending.

6. Cassegrain optics (8, 10) according to one of the preceding claims,
**characterized**
**in that** at least two lenses (50, 52, 54, 56, 68, 70, 72, 74) in the detector objective have at least one aspherical surface.

7. Cassegrain optics (8, 10) according to one of the preceding claims,
**characterized**
**in that** the detector objective has a plurality of converging lenses (50, 54, 56) composed of a converging lens material, and at least one diverging lens (52) composed of a diverging lens material, whose dispersion is greater than that of the converging lens material.

8. Cassegrain optics (8, 10) according to one of the preceding claims,
**characterized**
**in that** the detector objective has at least one diverging lens (52) composed of a diverging lens material, whose dispersion is greater than that of the optical material of the optical joint (14).

9. Cassegrain optics (8, 10) according to one of the preceding claims,
**characterized**
**in that** the optical joint (14) has an aspherical correction surface (64).

10. Cassegrain optics (8, 10) according to Claim 9,
**characterized**
**in that** the aspherical correction surface (64) is a negatively curved surface.

11. Cassegrain optics (8, 10) according to Claim 9 or 10,
**characterized**
**in that** the aspherical correction surface (64) is an optical inlet surface of the optical joint (14).

12. Cassegrain optics (8, 10) according to one of the preceding claims,
**characterized**
**in that** the material of the main mirror (18) has a higher thermal coefficient of expansion than the material of the secondary mirror (20) and of the holding means (22, 24).

13. Cassegrain optics (8, 10) according to one of the preceding claims,
**characterized**
**in that** the detector optics (16, 66) have two lens groups which can be moved relative to one another in the direction of the optical axis.

## Revendications

1. Optique Cassegrain (8, 10) destinée à former l'image d'une scène objet (60) sur un détecteur (48), l'optique Cassegrain comprenant une optique de détection (16, 66) comportant un objectif à plusieurs lentilles (50, 52, 54, 56, 68, 70, 72, 74), une optique à miroir (12) mobile par rapport à l'optique de détection (16, 66), comportant un miroir principal (18) et un miroir secondaire (20) et un joint optique (14) destiné à asservir le chemin de faisceau vers le détecteur (48) lors d'un mouvement de roulis et de tangage de l'optique à miroir (12),
**caractérisée en ce que** le miroir principal (18) présente une surface diffractante (62), dans laquelle la surface diffractante (62) est sélectionnée de manière spécifique afin que le foyer du miroir principal (18) se situe à des distances différentes pour des couleurs différentes.

2. Optique Cassegrain (8, 10) selon la revendication 1,
**caractérisée en ce que** l'optique à miroir (12) mobile comporte un miroir principal (18) asphérique concave et un miroir secondaire (20) asphérique convexe et **en ce que** le joint optique (14) fait saillie dans un espace d'installation entre les deux miroirs (18, 20).

3. Optique Cassegrain (8, 10) selon la revendication 1 ou 2,
**caractérisée en ce que** l'objectif de détection est constitué de quatre lentilles (50, 52, 54, 56, 68, 70, 72, 74) qui forment une image de la scène objet sur le détecteur (48).

4. Optique Cassegrain (8, 10) selon la revendication 3,
**caractérisée en ce que** les première, troisième et quatrième des quatre lentilles (50, 54, 56, 68, 72, 74) sont des lentilles collectrices et **en ce que** la deuxième lentille (52, 70) est une lentille divergente.

5. Optique Cassegrain (8, 10) selon la revendication 3 ou 4,
**caractérisée en ce que** les première et troisième des quatre lentilles (50, 54, 68, 72) présentent une déviation négative, **en ce que** la deuxième lentille (52, 70) présente une déviation positive ou négative et **en ce que** la quatrième lentille (56, 74) présente une déviation positive ou nulle.

6. Optique Cassegrain (8, 10) selon l'une des revendications précédentes,
**caractérisée en ce qu'**au moins deux lentilles (50, 52, 54, 56, 68, 70, 72, 74) de l'objectif de détection présentent au moins une surface asphérique.

7. Optique Cassegrain (8, 10) selon l'une des revendications précédentes,
**caractérisée en ce que** l'objectif de détection comporte plusieurs lentilles collectrices (50, 54, 56) constituées d'un matériau de lentille collectrice et au moins une lentille divergente (52) constituée d'un matériau de lentille divergente dont la dispersion est supérieure à celle du matériau de lentille collectrice.

8. Optique Cassegrain (8, 10) selon l'une des revendications précédentes,
**caractérisée en ce que** l'objectif de détection comporte au moins une lentille divergente (52) constituée d'un matériau de lentille divergente dont la dispersion est supérieure à celle du matériau optique du joint optique (14).

9. Optique Cassegrain (8, 10) selon l'une des revendications précédentes,
**caractérisée en ce que** le joint optique (14) présente une surface de correction asphérique (64).

10. Optique Cassegrain (8, 10) selon la revendication 9,
**caractérisée en ce que** la surface asphérique (64) est une surface de courbure négative.

11. Optique Cassegrain (8, 10) selon la revendication 9 ou 10,
**caractérisée en ce que** la surface de correction asphérique (64) est la surface d'entrée optique du joint optique (14).

12. Optique Cassegrain (8, 10) selon l'une des revendications précédentes,
**caractérisée en ce que** le matériau du miroir principal (18) présente un coefficient de dilatation thermique supérieur à celui du matériau du miroir secondaire (20) et du moyen de support (22, 24).

13. Optique Cassegrain (8, 10) selon l'une des revendications précédentes,
**caractérisée en ce que** l'optique de détection (16, 66) comporte des groupes de lentilles pouvant être déplacés les uns par rapport aux autres dans la direction de l'axe optique.
